# EUROPÄISCHE PATENTSCHRIFT

(11) **EP 1 150 862 B1**
(45) Veröffentlichungstag und Bekanntmachung des Hinweises auf die Patenterteilung: **16.10.2002**
(21) Anmeldenummer: 00906287.8
(22) Anmeldetag: 07.02.2000
(51) Int. Cl.: B60R 1/074

(54) **FAHRZEUGAUSSENSPIEGEL UND VERFAHREN ZU DESSEN STEUERUNG**
EXTERIOR REAR MIRROR FOR A VEHICLE AND METHOD FOR CONTROLLING SAME
RETROVISEUR EXTERIEUR POUR VEHICULE ET PROCEDE DE REGLAGE Y RELATIF

(30) Priorität: 10.02.1999 DE 19906150
(43) Veröffentlichungstag der Anmeldung: 07.11.2001
(73) Patentinhaber: Magna Reflex Holding GmbH, 97959 Assamstadt (DE)
(72) Erfinder: HEINZ, Jürgen, A., 91541 Rothenburg (DE)
(74) Vertreter: Pfenning, Meinig & Partner GbR
(86) Internationale Anmeldenummer: EP0000936
(87) Internationale Veröffentlichungsnummer: WO00047447

(56) Entgegenhaltungen:
- EP-A- 0 169 245
- EP-A- 0 333 901
- EP-A- 0 367 134
- EP-A- 0 545 197
- WO-A-97/43144
- US-A- 4 981 349
- PATENT ABSTRACTS OF JAPAN vol. 016, no. 467 (M-1317), 29. September 1992 (1992-09-29) & JP 04 166440 A (HONDA MOTOR CO LTD;OTHERS: 01), 12. Juni 1992 (1992-06-12)
- PATENT ABSTRACTS OF JAPAN vol. 016, no. 299 (M-1274), 2. Juli 1992 (1992-07-02) & JP 04 081338 A (TOKAI RIKA CO LTD), 16. März 1992 (1992-03-16)
- PATENT ABSTRACTS OF JAPAN vol. 1998, no. 04, 31. März 1998 (1998-03-31) & JP 09 309382 A (ICHIKOH IND LTD), 2. Dezember 1997 (1997-12-02)
- PATENT ABSTRACTS OF JAPAN vol. 010, no. 218 (M-503), 30. Juli 1986 (1986-07-30) & JP 61 057444 A (MURAKAMI KAIMEIDOU:KK), 24. März 1986 (1986-03-24)

## Beschreibung

Die vorliegende Erfindung betrifft einen Fahrzeugaußenspiegel nach dem Oberbegriff des Patentanspruchs 1 und ein Verfahren zu dessen Steuerung nach Patentanspruch 15.

Solche Fahrzeugaußenspiegel dienen dem motorischen Ein- und Ausklappen eines Spiegelkopfes bzgl. eines Fahrzeugchassis. Hiermit wird z.B. erreicht, daß bei einem Parken des Fahrzeuges die Außenspiegel an das Fahrzeugchassis auf eine komfortable Weise angelegt werden können und damit der seitliche Raumbedarf des Fahrzeugs verringert sowie eine Beschädigung der Reflexionsfläche des Außenspiegels vermieden werden kann.

Es sind Fahrzeugaußenspiegel mit einem bezüglich einem Spiegelfuß schwenkbaren Spiegelkopf sowie einer Antriebs- und Steuervorrichtung zum motorischen Schwenken bezüglich des Spiegelfußes, wobei der Spiegelfuß am Fahrzeugchassis befestigt ist und die Antriebs- und Steuervorrichtung mindestens ein Positionssensor zur Positionserfassung des Spiegelkopfes bezüglich des Spiegelfußes enthält, bekannt. Die US-Patentschrift 4626084 beschreibt einen gattungsgemässen Außenspiegel, dessen Spiegelkopf mit Hilfe eines Elektromotors schwenkbar ist. Die Schwenklage des Spiegelkopfes ist durch mehrere Mikroschalter detektierbar, wobei jeder Mikroschalter einer bestimmten Lage zugeordnet ist und diese klar identifiziert.

Eine solche Vorrichtung nach dem Stand der Technik weist den Nachteil auf, daß zur eindeutigen Identifizierung der Lage des Spiegelkopfes ein hoher Aufwand nötig ist. Für jede einzelne Lage ist ein gesonderter Mikroschalter notwendig, dies bedeutet hohe Materialund Montagekosten und birgt die Gefahr einer hohen Fehleranfälligkeit. Außerdem ist das Steuerprogramm für einen solchen Spiegel nach dem Stand der Technik wenig komfortabel, da besonders nach einem nichtmotorischen Verschwenken des Spiegelkopfes durch äußere Einflüsse die "Selbstfindung" des Spiegelkopfes, das heißt das selbsttätige Einstellen einer definierten Position des Spiegelkopfes, langwierig ist.

Der vorliegenden Erfindung liegt daher die Aufgabe zugrunde, einen Fahrzeugaußenspiegel sowie ein Verfahren zu dessen Steuerung zu schaffen, bei dem auf eine einfache und zuverlässige Weise der Schwenkzustand des Spiegelkopfes erkennbar ist und somit das Schwenken des Spiegelkopfes in eine bestimmte definierte Position ermöglicht wird.

Diese Aufgabe wird durch einen Fahrzeugaußenspiegel nach dem Oberbegriff des Hauptanspruches in Verbindung mit den kennzeichnenden Merkmalen des Hauptanspruches gelöst sowie ein Verfahren nach Anspruch 15 gelöst.

Dadurch, daß der Positionssensor als Sensor zur Unterscheidung von End- und Zwischenlagen ausgeführt ist, ein Normalbewegungsbereich des Positionssensors durch die Endlagen begrenzt ist, und durch Vorgabe einer bestimmten Antriebsrichtung durch die Antriebsund Steuervorrichtung und Durchlaufen dieser Antriebsrichtung bis zum Erreichen einer Endlage durch den Positionssensor eine bestimmte Endlage erkennbar ist, kann besonders bei einer Mehrzahl von Endlagen der Bauaufwand für Positionssensoren minimiert werden. Wird z.B. der Normalbewegungsbereich des Positionssensors (und damit auch der Normalbewegungsbereich des korrespondierenden Spiegelkopfes) durch zwei Endlagen begrenzt, ist mit einem einzigen Positionssensor, z.B. einem Mikroschalter, die klare Identifizierung einer bestimmten Endlage möglich. Die Antriebsund Steuervorrichtung nimmt eine bestimmte Antriebsrichtung für den Spiegelkopf an, bis der Positionssensor eine Endlage meldet. Diese Endlage wird durch die angenommene Drehrichtung hierbei klar bestimmt, da jeder der Drehrichtungen jeweils einer Endlage genau zugeordnet ist (die Endlagen befinden sich auf einem Kreisbogen). Somit reicht z.B. ein einziger Mikroschalter in Verbindung mit einer Nockenscheibe, welche einen Normalbewegungsbereich z.B. durch Anschläge vorgibt und im Bereich der Anschläge z.B. Erhöhungen oder Vertiefungen zur Kennzeichnung von Endlagen aufweist, zur mechanischen Realisierung der erfindungsgemäßen Erkennungseinheit aus. Die Vorgabe einer bestimmten Antriebsrichtung und das Zuordnen dieser Antriebsrichtung zu einer bestimmten Endlage sowie die "Selbstfindung" des Spiegelkopfes, besonders nach einem nichtmotorischen Verschwenken kann auf sehr einfache und kostengünstige Weise durch eine in der Antriebs- und Steuervorrichtung realisierte elektronische Schaltung realisiert werden.

Vorteilhafte Weiterbildungen der vorliegenden Erfindung werden in den abhängigen Ansprüchen angegeben.

Eine vorteilhafte Ausführungsform sieht vor, daß im Bereich der Endlagen Anschläge vorgesehen sind, welche beim motorischen Schwenken des Spiegelkopfes in Richtung aus dem Normalbewegungsbereich hinaus sperrend und zu dem Normalbewegungsbereich hin nichtsperrend sind. Es ist weiterhin vorteilhaft, daß ein Antrieb der Antriebs- und Steuervorrichtung einerseits am Spiegelkopf und andererseits am Spiegelfuß befestigt ist und eine Rutschkupplung aufweist. Hiermit wird Sicherheitsvorschriften Rechnung getragen, welche ein Verschwenken des Spiegelkopfes auch bei äußerer Schlageinwirkung fordern. Im Zusammenspiel mit den einseitig wirkenden Anschlägen wird erreicht, daß der Spiegelkopf einerseits aus dem Normalbewegungsbereich durch Schlageinwirkung hinaus bewegt werden kann, durch motorische Bewegung des Spiegelkopfes ein Verlassen des Normalbewegungsbereiches jedoch nicht möglich ist.

Weitere vorteilhafte Weiterbildungen der vorliegenden Erfindung werden in den übrigen abhängigen Ansprüchen angegeben. Die vorliegende Erfindung wird nun anhand mehrerer Figuren erläutert. Es zeigen:
- Fig. 1a: eine schematische Darstellung eines erfindungsgemäßen Fahrzeugaußenspiegels in Fahrstellung,
- Fig. 1b: eine schematische Darstellung eines erfindungsgemäßen Außenspiegels in Park- sowie überstreckter Stellung,
- Fig. 1c: eine schematische Darstellung der Antriebsund Steuervorrichtung eines erfindungsgemäßen Fahrzeugaußenspiegels,
- Fign. 2a - 2c: Ablaufdiagramme von Unterprogrammen eines Steuerprogrammes des erfindungsgemäßen Außenspiegels,
- Fig. 3: ein Ablaufdiagramm des Steuerprogramms für den erfindungsgemäßen Fahrzeugaußenspiegel,
- Fig. 4: ein Funktionsschema des Steuerprogramms des erfindungsgemäßen Außenspiegels.

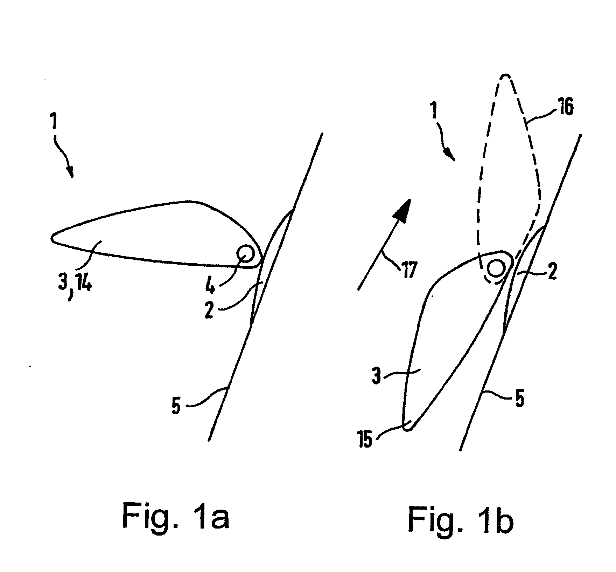

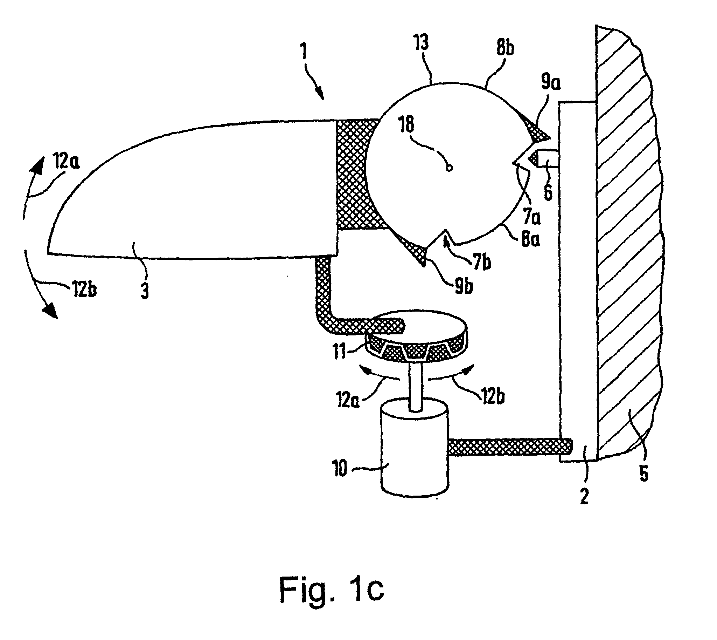

Fig. 1a zeigt einen Fahrzeugaußenspiegel 1 mit einem Spiegelkopf 3. Der Spiegelkopf weist eine nicht näher dargestellte Reflexionsfläche auf. Der Spiegelkopf ist über eine im Bereich der Antriebs- und Steuervorrichtung 4 liegendes Drehgelenk mit einem Spiegelfuß 2 verbunden. Der Spiegelfuß 2 ist an einem Fahrzeugchassis 5 befestigt. Der Spiegelkopf 3 befindet sich in "Fahrstellung", in dieser Stellung weist der Spiegelkopf 3 im Wesentlichen senkrecht vom Fahrzeugchassis 5 fort, so daß einem im Innenraum des Fahrzeugs befindlichem Fahrer die Rücksicht ermöglicht wird.

Fig. 1b zeigt zwei weitere Extremstellungen des Spiegelkopfes 3. Hierbei bezeichnet die Stellung 15 eine "Parkstellung", in dieser Stellung liegt der Spiegelkopf 3 im Wesentlichen am Fahrzeugchassis 5 an, so daß eine Reflexionsfläche des Spiegelkopfes 3 geschützt ist. Als Strichlinie dargestellt ist die "Überstreckstellung" 16, bei der der Spiegelkopf 3 in Fahrtrichtung 17 des Fahrzeugs geklappt ist. Diese Position kann nicht durch motorisches Verfahren des Spiegelkopfes 3 erreicht werden, sie ist nur durch äußere mechanische Einwirkung zu erreichen.

Fig. 1c zeigt eine schematische Darstellung der Antriebs- und Steuervorrichtung eines erfindungsgemäßen Fahrzeugaußenspiegels. Die schwarz ausgefüllten Flächen, welche jeweils zwei Bauteile miteinander verbinden, deuten eine mechanische Kopplung (Befestigung) an.

Eine Nockenscheibe 13 ist mit dem Spiegelkopf 3 fest verbunden. Die Nockenscheibe 13 ist um ein Gelenk 18, welches an dem Spiegelfuß 2 befestigt ist, drehbar. Ein Mikroschalter 6, welcher am Spiegelfuß 2 befestigt ist, greift in den Außenumfang der Nockenscheibe 13 ein. Es ist selbstverständlich auch möglich, daß in kinematischer Umkehrung zu dem hier gezeigten Ausführungsbeispiel der Mikroschalter am Spiegelkopf und die Nockenscheibe am Spiegelfuß befestigt sind. Es ist weiterhin möglich, daß der Positionssensor nicht als Mikroschalter, sondern als Sensor mit auf einem Magnetfeld basierenden, einem optischen oder auf dem Halleffekt basierenden Meßprinzip ausgeführt ist.

Die Nockenscheibe 13 weist im Bereich von Endlagen 7a und 7b Vertiefungen auf. Zwischen diesen Endlagen, in welchen der Mikroschalter 6 nicht ausgelöst wird, befindet sich ein kreisbogenförmiger Abschnitt 8a, welcher als "Zwischenlage" ausgeführt ist, in welcher der Mikroschalter 6 betätigt ist. Selbstverständlich ist es auch möglich, daß die Endlagen erhöht und die Zwischenlagen vertieft sind.

Der Mikroschalter 6 ist als digitaler Schalter ausgeführt, so daß er zwischen "Endlage" und "Zwischenlage" unterscheiden kann. Ein "Normalbewegungsbereich" des Positionssensors ist durch die Endlagen 7a und 7b begrenzt. Normalerweise bewegt sich der Mikroschalter im Bereich zwischen der Endlage 7a (diese entspricht der Fahrstellung 14) und der Endstellung 7b (diese entspricht der Parkstellung 15).

Ein Antrieb 10 der Antriebs- und Steuervorrichtung 4, welcher einen Elektromotor enthält, ist einerseits am Spiegelkopf 3 und andererseits am Spiegelfuß 2 befestigt und weist eine Rutschkupplung 11 auf. Diese kann z.B. als Klauenkupplung mit angeschrägten Klauen ausgeführt sein. Die Rutschkupplung dient primär zwei Zwecken. Zum einen sorgt sie dafür, daß bei einer externen Bewegung des Spiegelkopfes 3 ab einem bestimmten Drehmoment die Rutschkupplung durchdreht und somit das nach Sicherheitsvorschriften geforderte Bewegen des Spiegelkopfes möglich ist. Außerdem wird auch einer Beschädigung des Motors durch Blockstrom bei einem Blockieren des Spiegelkopfes 3 (etwa durch Vereisung oder durch Festhalten) vorgebeugt.

Der Normalbewegungsbereich der Nockenscheibe 13 ist durch zwei Anschläge 9a und 9b, welche jeweils an den Anschlägen 7a und 7b angeordnet sind, begrenzt. Die Anschläge haben die Eigenschaft, daß sie bei einem motorischen Schwenken des Spiegelkopfes 3 in Richtung aus dem Normalbewegungsbereich hinaus sperrend sind. D.h., daß durch den Antrieb 10 allein der Mikroschalter 6 nie den Normalbewegungsbereich verläßt. Kommt es jedoch zu einer äußeren mechanischen Belastung auf den Spiegelkopf 3, so kann bei Überschreitung eines festgelegten Grenzmomentes der Mikroschalter 6 z.B. den Anschlag 9a überspringen und eine Position auf dem Bereich 8b der Nockenscheibe annehmen. Dies ist z.B. der Fall, wenn der Spiegelkopf 3 eine überstreckte Stellung 16 (siehe Fig. 1b) annimmt. Bei einem motorischen Bewegen durch den Antrieb 10 in Richtung 12b kann jedoch der Bereich 8b, welcher als "Zwischenlage" (d.h. daß der Mikroschalter betätigt ist) ausgeführt ist, durch Abgleiten an dem Anschlag 9a wieder verlassen werden, so daß sich der Mikroschalter 6 wieder im Normalbewegungsbereich befindet.

Die sägezahnförmige Ausführung der Anschläge 9a und 9b in Fig. 1c dient der guten Veranschaulichung. Es ist jedoch auch möglich, die Nockenscheibe im Wesentlichen kreisrund (mit Ausnahme der Anschläge 7a und 7b) auszuführen und die einseitig sperrenden Anschläge 9a und 9b an einer anderen Stelle des Antriebs anzubringen.

Erfindungsgemäß ist es möglich, unter Einsatz eines einzigen Mikroschalters 6 zu erkennen, ob sich der Mikroschalter 6 in der Endlage 7a oder der Endlage 7b oder einer Zwischenlage (8a, 8b) befindet. Hierzu verfügt die Antriebs- und Steuervorrichtung über eine Einheit, welche einer bestimmten Endlage eine bestimmte Drehrichtung zuordnet. Hierzu gibt die Antriebs- und Steuervorrichtung nach Anforderung durch einen Bediener (etwa durch Knopfdruck) eine bestimmte Antriebsrichtung vor und durchläuft diese bis zum Erreichen einer Endlage durch den Mikroschalter 6. Wird z.B. als Drehrichtung 12a vorgegeben und durchlaufen und schließlich eine Endlage erreicht, so wird als Endlage die Endlage 7a erkannt. In derselben Weise wird der Drehrichtung 12b die Endlage 7b (d.h. die Parkstellung 15, siehe Fig. 1b) zugeordnet. Falls der Spiegelkopf 3 sich vor der Vorgabe und dem Durchlaufen einer bestimmten Antriebsrichtung in einer Endlage befindet, sorgt eine Schaltung der Antriebs- und Steuervorrichtung dafür, daß die Endlage zunächst verlassen wird, da im statischen Zustand ein Erkennen, welche Endlage vorliegt, nicht möglich ist. Die Antriebs- und Steuervorrichtung verfügt weiterhin über einen Speicher, welcher die zuletzt bestimmte Endlage speichert. (Ob diese Endlage tatsächlich noch besteht ist jedoch durch Durchlaufen einer vorzugebenden Antriebsrichtung zu überprüfen, da es möglich ist, daß zwischenzeitlich der Spiegelkopf mechanisch in eine andere Lage bewegt wurde.)

Die Antriebs- und Steuervorrichtung verfügt außerdem über eine Zeitschaltung zur Umkehrung der Antriebsrichtung 12a bzw. 12b oder zum Anhalten des Antriebs nach einer festlegbaren Zeitdauer (z.B. zwischen 50 und 1000 Millisekunden) des Antreibens des Spiegelkopfes 3 in Richtung über eine der Endlagen 7a bzw. 7b hinaus bei in Endlage befindlichem Mikroschalter 6. Es ist jedoch auch möglich, die Antriebs- und Steuervorrichtung mit einer Blockstromschaltung zur Umkehrung der Antriebsrichtung oder zum Anhalten des Antriebs bei einem festlegbaren Blockstrom bei Antreiben des Spiegelkopfes in Richtung über die Endlagen hinaus bei in Endlage befindlichen Positionssensor zu versehen.

Bei dem weiter unten ausgeführten Beispiel wird ein Steuerprogramm geschrieben, welches zwei Fahrzeugaußenspiegel (jeweils auf der Fahrer- und der Beifahrerseite des Fahrzeugchassis) ansteuert. Selbstverständlich ist jedoch auch das Ansteuern nur eines Spiegels in analoger Weise möglich. Hierbei kann auch vorgesehen werden, daß die Antriebs- und Steuervorrichtung einen Betätigungsschalter aufweist und so ausgeführt ist, daß nach einmaliger Betätigung dieses Schalters beide Spiegel in die Parkposition 15 fahren, wenn sie vorher beide in Fahrposition 14 waren und beide in Fahrposition fahren, wenn sie vorher in Parkposition waren oder mindestens einer sich außerhalb des Normalbewegungsbereiches, z.B. der Überstreckstellung 16, befand. Außerdem ermöglicht die Steuerung, daß bei einem nach vorne abgeklappten Spiegel (z.B. Stellung 16) nach Betätigen des Betätigungselementes der Spiegelkopf 3 in Richtung der Parkposition 15 beigeklappt wird und dabei unmittelbar nach Passieren der Fahrposition 14 die Drehrichtung für eine kurze Zeit ändert, um den Spiegelkopf 3 gegen den Anschlag 9a zu pressen und somit einen festen und damit vibrationsarmen Sitz zu gewährleisten. Besonders vorteilhaft ist, daß im Gegensatz zu Vorrichtungen nach dem Stand der Stand der Technik nach einem Schwenken des Spiegelkopfes 3 in die überstreckte Stellung 16 das Anfahren der Parkposition nicht mehr notwendig ist, um den Spiegelkopf 3 mechanisch einzurasten.

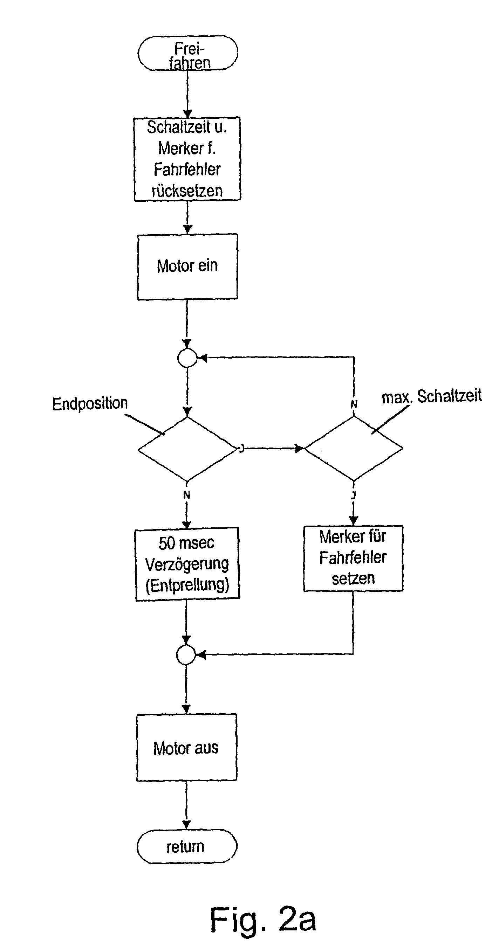

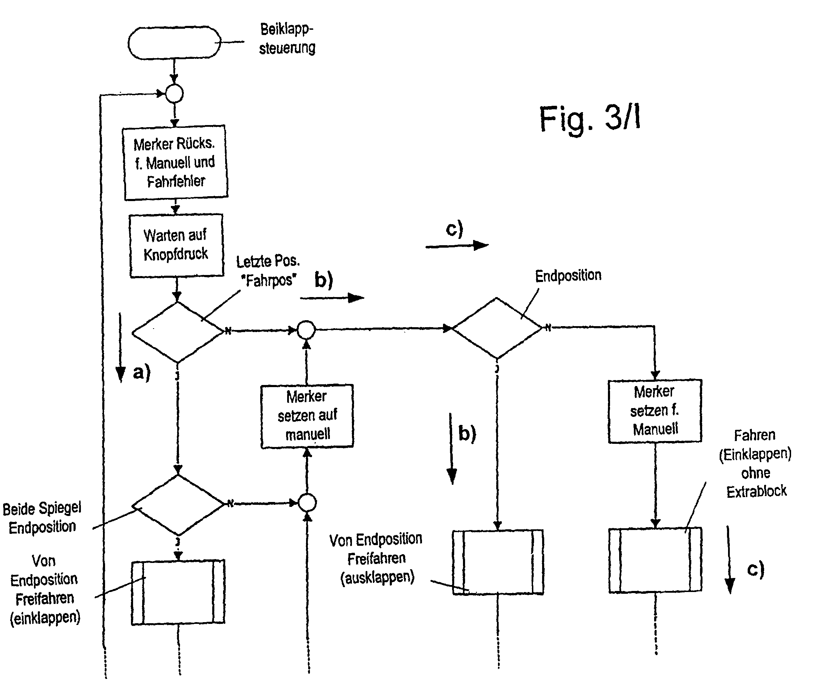

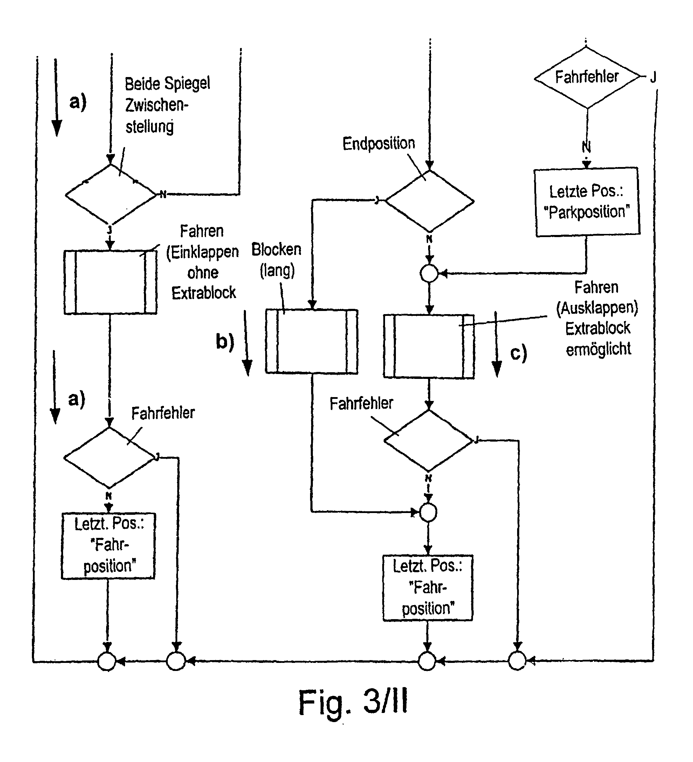

Im Folgenden wird das Steuerprogramm für einen erfindungsgemäßen Fahrzeugaußenspiegel nach Fig. 3 ausführlich erläutert. Hierbei wird auf die in Fign. 2a bis 2c gezeigten Unterprogramme Bezug genommen. Die Ansteuerung des Fahrzeugaußenspiegels durch den Bediener erfolgt durch einen einfachen Betätigungsschalter, der zur Antriebs- und Steuervorrichtung gehört. Im Normalfall wird hiermit durch einmaligen Knopfdruck alternierend zwischen der Fahrstellung 14 und der Parkstellung 15 der Spiegelkopf 3 bewegt.

Die Unterprogramme beschreiben jeweils einzelne, immer wieder benötigte Routinen.

In Fig. 2a wird eine Routine für "Freifahren" beschrieben. Diese kommt zum Einsatz, wenn der Positionssensor in der Ausgangsstellung eine Endlage meldet und diese verlassen, d.h. "freigefahren" werden soll.

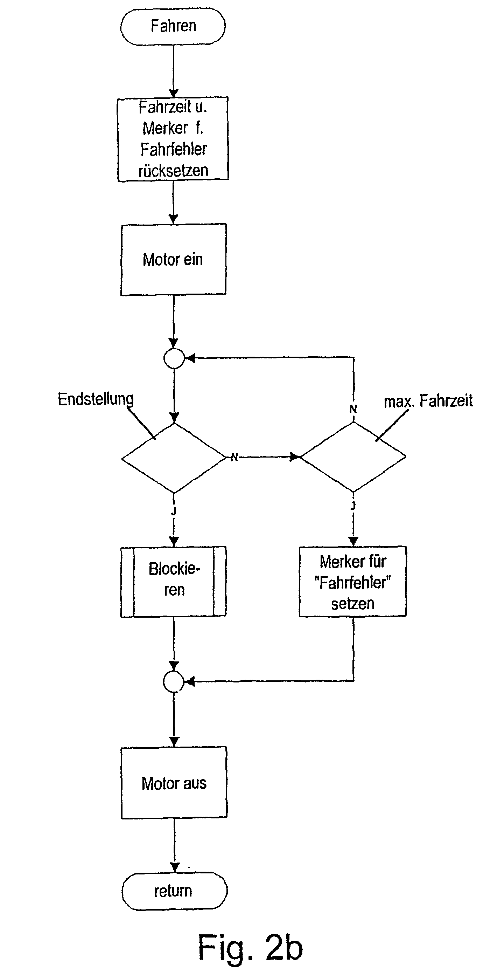

Fig. 2b beschreibt die Routine "Fahren". Diese kommt zum Einsatz, wenn der Positionssensor freigefahren ist und die nächste Endlage (bzw. "Endstellung") ansteuert.

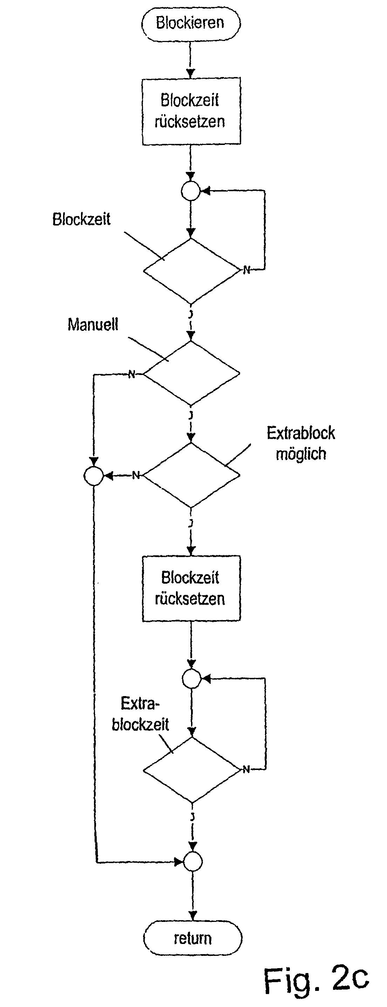

Schließlich sorgt die in Fig. 2c gezeigte Routine "Blockieren" dafür, daß der in die Endlage gefahrene Positionssensor bzw. Spiegelkopf in der neuen Endstellung arretiert wird.

Im Folgenden wird anhand einzelner Beispiele das Steuerprogramm nach Fig. 3 erklärt. Zur mechanischen Veranschaulichung der Vorgänge wird hierbei auf Fig. 1c verwiesen. In sämtlichen Diagrammen bedeutet J "Ja" und N "Nein".

### Beispiel a):

Der Spiegelkopf 3 befindet sich in Fahrstellung und soll in die Parkstellung überführt werden:

Am Anfang des Steuerprogramms "Beiklappsteuerung" werden zunächst Merker für aufgetretene Fahrfehler "Fahrfehler" und für das manuelle Ausrasten des Spiegelkopfes 3, d.h. das nichtmotorische Bewegen des Spiegelkopfes 3 "manuell" zurückgesetzt. Nach Bedienung des Betätigungsschalters "Warten auf Knopfdruck" prüft das Programm, ob die Antriebs- und Steuervorrichtung als letzte Position beider Fahrzeugaußenspiegel die "Fahrposition" (Stellung 14 in Fig. la) gespeichert hat. Dies ist in vorliegendem Beispiel der Fall.

Daraufhin wird abgefragt, ob beide Spiegel in einer Endposition, d.h. in der Lage 7a oder 7b (siehe Fig. 1c) sind. Ist dies nicht der Fall, wird ein manuell ausgelenkter Außenspiegel angenommen, auf diesen Fall wird weiter unten (unter c) eingegangen. Im vorliegenden Fall wird davon ausgegangen, daß sich beide Außenspiegel tatsächlich in der Fahrstellung, also der Positionssensor 6 in der Einkerbung 7a, befinden. Nun wird das Unterprogramm "Freifahren", siehe Fig. 2a, durchlaufen. Dies geschieht in Richtung "Einklappen", d.h. in Richtung 12b, zu der Parkstellung (siehe 15 in Fig. 1b) hin.

In dem Unterprogramm "Freifahren" wird zunächst der Merker für "Fahrfehler" wieder zurückgesetzt. Außerdem wird ein Merker für "Schaltzeit" zurückgesetzt (hierbei handelt es sich um eine übergeordnete Zeitschleife, welche z.B. bei einem Blockieren des Antriebs nach einer vorzugebenden Zeit, z.B. 1000 Millisekunden, die Spannungsversorgung des Antriebs abschaltet, um Schäden durch Blockstrombelastung zu vermeiden). Dann wird zunächst abgefragt, ob sich der Mikroschalter 6 noch in einer Endlage (vorliegend Endlage 7a nach Fig. 1c) befindet. Dies ist der Fall. Nun wird in einer Zeitschleife überprüft, ob der Positionssensor innerhalb der maximalen Schaltzeit die Endposition verläßt (dies wird in Fig. 1c durch ein "Eindrücken" des Mikroschalters erkannt). Ist dies nicht der Fall, d.h. kommt es zu keiner Bewegung des Spiegelkopfes 3 bei eingeschaltetem Motor, so wird ein Merker für "Fahrfehler" gesetzt und der Motor ausgeschaltet. Kommt es zu einer Veränderung, d.h. daß die Endposition verlassen wird, bleibt der Antrieb 50 Millisekunden zusätzlich eingeschaltet, damit der Mikroschalter in jedem Falle die Endposition verläßt und nicht wieder in diese zurückfällt. Daraufhin wird der Motor wieder ausgeschaltet.

Nun wird in Fig. 3 abgefragt, ob sich beide Fahrzeugaußenspiegel in einer Zwischenstellung befinden. Ist dies nicht der Fall, ist von einer mechanischen Ausrastung auszugehen, so daß ein Merker für "manuell" gesetzt wird. Befinden sich beide Spiegel in der Zwischenstellung, d.h. im Abschnitt 8a auf Fig. 1c, so wird das Unterprogramm "Fahren" angewählt. Vorliegend erfolgt der Motorantrieb in Richtung "Einklappen", d.h. in Richtung 12b. in der Parkstellung, in welche eine Bewegung in Richtung 12b vorliegend führt, wird auf einen sogenannten "Extrablock" verzichtet, dieser kommt dann zum Einsatz, wenn der Spiegelkopf manuell ausgerastet wurde.

In der Routine "Fahren" nach Fig. 2b wird zunächst der Merker für "Fahrfehler" zurückgesetzt. Außerdem wird ein Merker für "Fahrzeit" zurückgesetzt (hierbei handelt es sich wiederum um eine übergeordnete Zeitschleife zur Verhinderung einer Beschädigung des Motors durch Blockstrombelastung, diese kann z.B. auf 1000 Millisekunden festgelegt werden). Dann wird der Motor eingeschaltet, so daß sich der Spiegelkopf 3 in Richtung 12b bewegt. Nachfolgend wird abgefragt, ob beide Fahrzeugaußenspiegel sich in einer Endstellung befinden. Dies geschieht über die Dauer einer "Fahrzeit"-Zeitschleife. Wird innerhalb der maximalen Fahrzeit nicht durch beide Außenspiegel eine Endstellung erreicht, so wird ein Merker für "Fahrfehler" gesetzt. Wird eine Endstellung erreicht, ist also davon auszugehen, daß der Mikroschalter 6 sich in der Position 7b (siehe Fig. 1c) befindet, wird das Unterprogramm "Blockieren" aufgerufen.

Das Unterprogramm "Blockieren" nach Fig. 2c beginnt damit, daß eine "Blockzeit" (wieder eine übergeordnete Zeitschleife) zurückgesetzt wird. Dann erfolgt ein Anlaufen gegen den Anschlag 9b (der Motor ist immer noch eingeschaltet und läuft in Richtung 12b weiter). Diese Blockzeit, z.B. 100 Millisekunden erfolgt zur Verspannung des Getriebes (dies bewirkt einen vibrationsärmeren Lauf). Nach Ablauf dieser Blockzeit erfolgt eine Abfrage, ob der Merker "manuell" gesetzt wurde. Dies ist nicht der Fall, so daß in das Unterprogramm "Fahren" nach Fig. 2b zurückverzweigt wird und der Motor ausgeschaltet wird. Schließlich erfolgt im Hauptprogramm nach Fig. 3 die Abfrage, ob ein Fahrfehler vorlag. War dies der Fall, so wird zum Programmanfang zurückverzweigt. Lag kein Fahrfehler vor, so wird in der Antriebs- und Steuervorrichtung als Position "Parkposition" (siehe Position 15 in Fig. 1b) gespeichert.

### Beispiel b):

Der Spiegelkopf 3 befindet sich in der Parkstellung und soll in die Fahrstellung gebracht werden:

Nach Fig. 3 kommt es in dem Hauptprogramm "Beiklappsteuerung" zunächst zum Zurücksetzen der Merker für "manuell" und "Fahrfehler". Auf Knopfdruck erfolgt dann die Abfrage, ob die letzte Position eine "Fahrposition" (Stellung 14) war. Dies ist vorliegend nicht der Fall, da eine Parkposition (Stellung 15, der Mikroschalter 6 befindet sich in der Einbuchtung 7b) vorliegt. Hiernach erfolgt die Abfrage, ob beide Außenspiegel in einer Endposition sind. Liegt eine korrekte Parkstellung bei beiden vor, so ist dies der Fall. Nachfolgend wird ein Unterprogramm "von Endposition Freifahren (ausklappen)" gestartet. "Ausklappen" bezeichnet hierbei die Bewegungsrichtung 12a in Fig. 1c. Auf die oben beschriebenen Weise wird darin nach Fig. 2a die Endposition 7b verlassen, so daß der Mikroschalter 6 ausgelöst wird und sich in Zwischenstellung 8a befindet.

Nachfolgend wird abgefragt, ob beide Außenspiegel in einer Endposition sind. Vorliegend wird dies verneint, da sich der Mikroschalter 6 in einer Zwischenstellung befindet (würde sich der Spiegelkopf 3 bereits in der Endposition, d.h. der Fahrstellung, befinden, so würde ein "Blockieren" nach Fig. 2c den Spiegelkopf in der Fahrstellung verspannen). Vorliegend wird jedoch der Spiegelkopf 3 so bewegt, daß der Zwischenstellungsbereich 8a durchlaufen wird, indem der Spiegelkopf 3 in Richtung 12a bewegt wird. Am Ende des Fahrvorganges, welcher durch Erreichen der Endlage 7a eingeleitet wird, kommt es zu einem "Extrablock" des Spiegelkopfes 3. Dieses verstärkte Blockieren (erreicht durch eine längere Blockzeit) dient dazu, zur Herstellung der Vibrationsarmut im Fahrbetrieb den Spiegelkopf in der Fahrstellung besonders stark zu verspannen. Läuft dieses ohne Fahrfehler ab, wird als letzte Position die "Fahrposition" gespeichert. Kommt es zu einem Fahrfehler, kommt es z.B. zu einer entsprechenden Fehlermeldung in der Anzeigetafel des Fahrzeuges, der Bediener kann darüber hinaus einen erneuten Versuch starten.

### Beispiel c):

Der Spiegelkopf 3 ist manuell ausgerastet, als letzte Position wurde die Parkposition gespeichert und der Spiegelkopf soll in die Fahrposition gebracht werden.

Im Hauptprogramm nach Fig. 3 werden zunächst die Merker für "manuell" und "Fahrfehler" zurückgesetzt. Auf Knopfdruck des Bedieners wird abgefragt, ob die letzte Position eine Fahrstellung war. Da als letzte Position die Parkposition gespeichert wurde, wird dieses verneint. Dann wird abgefragt, ob es sich um eine Endposition handelt. Vorliegend wird davon ausgegangen, daß der Spiegel manuell in die überstreckte Stellung (siehe Stellung 16 in Fig. 1b gebracht wurde. Da der Mikroschalter 6 in diesem Fall sich in dem Zwischenstellungsbereich 8b befindet, wird die Frage nach der Endposition verneint.

Nachfolgend wird der Merker für "manuell" (d.h. der Spiegelkopf wurde nicht motorisch geschwenkt, die Rutschkupplung ist aber inzwischen, da sie nach Überlast stets wieder in die kraftübertragende Stellung zurückfällt, wieder im Eingriff) gesetzt. Dann wird das Unterprogramm "Fahren" nach Fig. 2b gestartet. Dies geschieht in Richtung "Einklappen", d.h. in Richtung 12b. der Spiegelkopf 3 fährt nach Fig. 2b solange, bis er innerhalb der zulässigen maximalen Fahrzeit eine Endstellung erreicht hat. Dies ist im vorliegenden Falle die Endstellung 7a (das Erreichen dieser Endstellung ist vom Bereich 8b zur Endlage 7a hin ohne weiteres möglich, da der Anschlag 9a lediglich in der Gegenrichtung sperrend für den Antrieb ist). Der Spiegelkopf wird sodann noch während der "Blockzeit" weiter in Richtung 12b bewegt. Kommt es hierbei zu keinem Pahrfehler, wird als letzte Position "Parkposition" gespeichert. Hiernach wird wiederum das Unterprogramm "Fahren" nach Fig. 2b angesteuert.

Dies verläuft in Richtung "Ausklappen", d.h. in Richtung 12a. Das Fahren erfolgt hierbei solange, bis beide Spiegel die Endstellung, d.h. die Fahrstellung 14 (siehe Fig. la) erreicht haben (dies geschieht innerhalb kürzester Zeit, da sich der Mikroschalter 6 zuvor in unmittelbarer Nähe des Anschlags 9 befand). Nach Erreichen der Endstellung 7a (siehe Fig. 2b) wird das Unterprogramm "Blockieren", siehe Fig. 2c, angesteuert. Hierbei kommt es zunächst zu einem Zurücksetzen der Blockzeit und dem Durchlaufen der Standardblockzeit. Die Abfrage nach "manuell" wird bejaht (Merker wurde oben gesetzt). Damit ist ein "Extrablock" ermöglicht. Es kommt daraufhin zu einem erneuten Zurücksetzen der Blockzeit und einem Durchlaufen einer "Extrablockzeit", welche länger ist als die normale Blockzeit. Die normale Blockzeit dient primär dem leichten Verspannen des Getriebes, um Beschädigungen bzw. Geräusche durch Vibrationen auszuschließen. Die Extrablockzeit, welche länger ist als die normale Blockzeit, dient dem besonders starken Verspannen des Spiegelkopfes 3 in der Fahrstellung 14. Nach Durchlaufen dieser Extrablockzeit, wobei der Mikroschalter 6 gegen den Anschlag 9a angelaufen ist, wird von dem Unterprogramm nach Fig. 2c in das Unterprogramm nach Fig. 2b zurückgekehrt, der Motor ausgeschaltet und in das Hauptprogramm zurückgekehrt. Da bei dem oben geschilderten Durchlauf kein Fahrfehler erkannt wurde, wird als letzte Position die "Fahrposition" also die Position, in welcher sich beide Außenspiegel derzeit befinden, gespeichert.

Bei den oben geschilderten drei Beispielfällen handelt es sich um besonders signifikante Stellungen, welche das ganze Spektrum der Möglichkeiten der Ablaufsteuerung des erfindungsgemäßen Fahrzeugspiegels beschreiben. Darüber hinaus sind jedoch noch weitere Durchlaufmöglichkeiten gegeben, welche jedoch nach den obigen Erklärungen mit Hilfe der gegebenen Flußdiagramme jedem Fachmann klar sind.

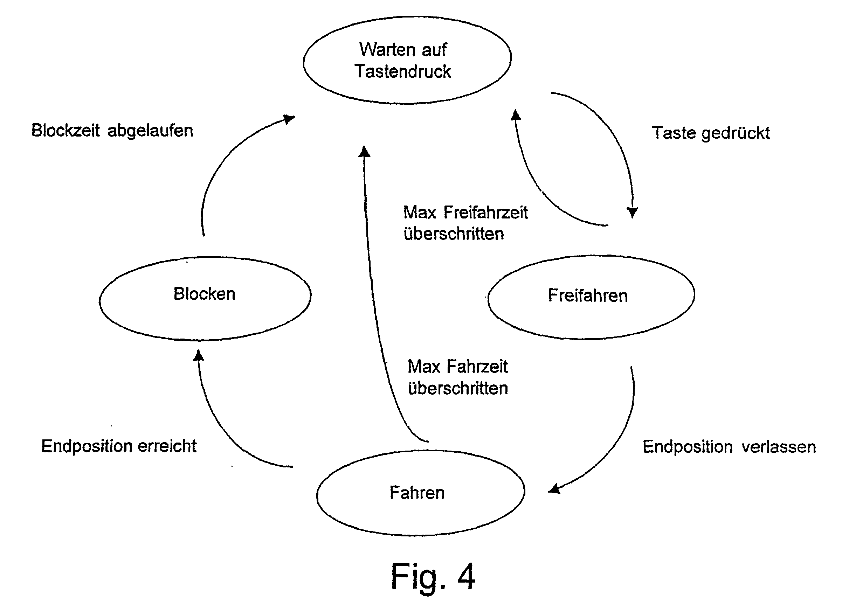

Abschließend sei auf Fig. 4 verwiesen, die in selbsterklärender Weise das Aufbauschema des Ablaufprogramms nach Fig. 3 beschreibt.

## Patentansprüche

1. Fahrzeugaußenspiegel (1) mit einem bezüglich einem Spiegelfuß (2) schwenkbaren Spiegelkopf (3) sowie einer Antriebs- und Steuervorrichtung (4) zum motorischen Schwenken des Spiegelkopfes bezüglich des Spiegelfußes, wobei der Spiegelfuß am Fahrzeugchassis (5) befestigt ist und die Antriebs- und Steuervorrichtung mindestens einen Positionssensor (6) zur Positionserfassung des Spiegelkopfes bezüglich des Spiegelfußes enthält,
**dadurch gekennzeichnet,**
**daß**
der Positionssensor als Sensor zur Unterscheidung von End- (7a, 7b) und Zwischenlagen (8a, 8b) ausgeführt ist,
ein Normalbewegungsbereich des Positionssensors durch die Endlagen begrenzt ist, und
durch Vorgabe einer bestimmten Antriebsrichtung (12a, 12b) durch die Antriebs- und Steuervorrichtung und Durchlaufen dieser Antriebsrichtung bis zum Erreichen einer Endlage (7a, 7b) durch den Positionssensor eine bestimmte Endlage erkennbar ist.

2. Fahrzeugaußenspiegel nach Anspruch 1, **dadurch gekennzeichnet, daß** im Bereich der Endlagen Anschläge (9a, 9b) vorgesehen sind, welche beim motorischen Schwenken des Spiegelkopfes (3) in Richtung aus dem Normalbewegungsbereich hinaus sperrend und zu dem Normalbewegungsbereich hin nicht sperrend sind.

3. Fahrzeugaußenspiegel nach Anspruch 1 oder 2, **dadurch gekennzeichnet, daß** ein Antrieb (10) der Antriebs- und Steuervorrichtung (4) einerseits am Spiegelkopf (3) und andererseits am Spiegelfuß (2) befestigt ist und eine Rutschkupplung (11) aufweist.

4. Fahrzeugaußenspiegel nach Anspruch 2, **dadurch gekennzeichnet, daß** der außerhalb des Normalbewegungsbereiches liegende Bereich als Zwischenlage (8b) ausgeführt ist.

5. Fahrzeugaußenspiegel nach einem der vorhergehenden Ansprüche, **dadurch gekennzeichnet, daß** die Antriebs- und Steuervorrichtung Speicher für eine zuvor bestimmte Endlage (7a, 7b) aufweist.

6. Fahrzeugaußenspiegel nach Anspruch 1, **dadurch gekennzeichnet, daß** ein einziger Positionssensor (6) vorgesehen ist.

7. Fahrzeugaußenspiegel nach einem der vorhergehenden Ansprüche, **dadurch gekennzeichnet, daß** die Antriebs- und Steuervorrichtung (4) eine Zeitschaltung zur Umkehrung der Antriebsrichtung (12a 12b) oder zum Anhalten des Antriebs nach einer festlegbaren Zeitdauer des Antreibens des Spiegelkopfes in Richtung über die Endlage hinaus bei in Endlage befindlichem Positionssensor aufweist.

8. Fahrzeugaußenspiegel nach einem der vorhergehenden Ansprüche, **dadurch gekennzeichnet, daß** die Antriebs- und Steuervorrichtung (4) eine Blockstromschaltung zur Umkehrung der Antriebsrichtung oder zum Anhalten des Antriebs bei einem festlegbaren Blockstrom bei Antreiben des Spiegelkopfes in Richtung über die Endlage (7a, 7b) hinaus bei in Endlage befindlichem Positionssensor aufweist.

9. Fahrzeugaußenspiegel nach einem der vorhergehenden Ansprüche, **dadurch gekennzeichnet, daß** der Positionssensor (6) als Sensor mit auf einem Magnetfeld basierenden, einem optischen oder auf dem Halleffekt basierenden Meßprinzip ausgeführt ist.

10. Fahrzeugaußenspiegel nach einem der vorhergehenden Ansprüche, **dadurch gekennzeichnet, daß** der Positionssensor ein Mikroschalter ist.

11. Fahrzeugaußenspiegel nach Anspruch 10, **dadurch gekennzeichnet, daß** der Mikroschalter (6) mit einer korrespondierenden Nockenscheibe (13) in Verbindung steht.

12. Fahrzeugaußenspiegel nach Anspruch 11, **dadurch gekennzeichnet, daß** die Nockenscheibe (13) am Spiegelfuß (2) und der Positionssensor (6) am Spiegelkopf (3) oder die Nockenscheibe am Spiegelkopf und der Positionssensor am Spiegelfuß befestigt sind.

13. Fahrzeugaußenspiegel nach Anspruch 11, **dadurch gekennzeichnet, daß** die Nockenscheibe im Bereich der Endlagen (7a, 7b) Erhöhungen oder Vertiefungen gegenüber den Zwischenlagen aufweist, wobei in der höher liegenden Lage der Mikroschalter (6) betätigt ist.

14. Fahrzeugaußenspiegel nach einem der vorhergehenden Ansprüche, **dadurch gekennzeichnet, daß** die Endlagen (7a, 7b) eine Parkposition (15), wobei der Spiegelkopf im Wesentlichen am Fahrzeugchassis (5) anliegt, sowie eine Fahrposition (14), wobei der Spiegelkopf (3) im Wesentlichen senkrecht vom Fahrzeugchassis (5) fortweist, sind.

15. Verfahren zur Steuerung mindestens eines Fahrzeugaußenspiegels nach Anspruch 14, **dadurch gekennzeichnet, daß** der Fahrzeugaußenspiegel auf Anforderung eines Bedieners in die Parkposition (15) gefahren wird, wenn er vorher in Fahrposition (14) war und in Fahrposition gefahren wird, wenn er vorher in Parkposition war oder sich außerhalb des Normalbewegungsbereiches (8a) befand.

## Claims

1. Vehicle exterior mirror (1) having a mirror head (3) which may be swivelled in relation to a mirror base (2), as well as a drive and control unit (4) for the motor-operated swivelling of the mirror head in relation to the mirror base, the mirror base being attached to the vehicle chassis (5) and the drive and control unit containing at least one position sensor (6) for detecting the position of the mirror head in relation to the mirror base,
**characterised in that**
the position sensor is designed as a sensor for distinguishing between end (7a, 7b) and intermediate positions (8a, 8b),
**in that** a normal movement range of the position sensor is delimited by the end positions, and
**in that** through the drive and control unit providing a specific drive direction (12a, 12b) and the position sensor running through this drive direction until an end position (7a, 7b) is reached, a specific end position may be recognised.

2. Vehicle exterior mirror according to claim 1, **characterised in that,** in the region of the end positions, stops (9a, 9b) are provided which, during the motor-operated swivelling of the mirror head (3) act to block in a direction out of the normal movement region and do not block in the direction towards the normal movement region.

3. Vehicle exterior mirror according to claim 1 or 2, **characterised in that** a drive (10) of the drive and control unit (4) is attached on the one hand to the mirror head (3) and on the other hand to the mirror base (2) and has a slip coupling (11).

4. Vehicle exterior mirror according to claim 2, **characterised in that** the region lying outside the normal movement region is realised as an intermediate position (8b).

5. Vehicle exterior mirror according to one of the preceding claims, **characterised in that** the drive and control unit has storage means for an end position (7a, 7b) determined previously.

6. Vehicle exterior mirror according to claim 1, **characterised in that** a single position sensor (6) is provided.

7. Vehicle exterior mirror according to one of the preceding claims **characterised in that** the drive and control unit (4) has a time circuit to reverse the drive direction (12a, 12b) or to stop the drive after a period of time, which may be fixed, for driving the mirror head in a direction beyond the end position, when the position sensor is located in the end position.

8. Vehicle exterior mirror according to one of the preceding claims, **characterised in that** the drive and control unit (4) contains a blocking current circuit to reveres the drive direction or to stop the drive in the case of a blocking current, which may be fixed, as the mirror head is driven in a direction beyond the end position (7a, 7b), when the position sensor is located in the end position.

9. Vehicle exterior mirror according to one of the preceding claims, **characterised in that** the position sensor (6) is configured as a sensor with a measuring principle based on a magnetic field or an optical measuring principle or one based on the Hall effect.

10. Vehicle exterior mirror according to one of the preceding claims, **characterised in that** the position sensor is a microswitch.

11. Vehicle exterior mirror according to claim 10, **characterised in that** the microswitch (6) is connected to a corresponding cam disc (13).

12. Vehicle exterior mirror according to claim 11, **characterised in that** the cam disc (13) is attached to the mirror base (2) and the position sensor (6) to the mirror head (3), or the cam disc is attached to the mirror head and the position sensor is attached to the mirror base.

13. Vehicle exterior mirror according to claim 11, **characterised in that** the cam disc has, in the region of the end positions (7a, 7b), raised parts or depressions in relation to the intermediate positions, the microswitch being actuated in the position lying higher.

14. Vehicle exterior mirror according to one of the preceding claims, **characterised in that** the end positions (7a, 7b) are a parking position (15), in which the mirror head lies substantially against the vehicle chassis (5) and a driving position (14), in which the mirror head (3) points substantially vertically away from the vehicle chassis (5).

15. Method of controlling at least one vehicle exterior mirror according to claim 14, **characterised in that** the vehicle exterior mirror is driven at the request of an operator into the parking position (15) if it was previously in the driving position (14), and is driven into the driving position if it was previously in the parking position or was located outside the normal movement region (8a).

## Revendications

1. Rétroviseur extérieur pour véhicule (1) présentant une tête de rétroviseur (3) pouvant pivoter par rapport à un pied de rétroviseur (2), ainsi qu'un dispositif d'entraînement et de commande (4) permettant l'orientation motorisée de la tête de rétroviseur par rapport au pied de rétroviseur, le pied du rétroviseur étant fixé au niveau du châssis de véhicule (5) et le dispositif d'entraînement et de commande contenant au moins un capteur de position (6) permettant d'acquérir la position de la tête de rétroviseur par rapport au pied de rétroviseur,
**caractérisé en ce que** le capteur de position est conçu en tant que capteur permettant de distinguer les positions de fin (7a, 7b) et intermédiaires (8a, 8b), **en ce qu'**une zone de déplacement normal du capteur de position est délimitée par les positions de fin, et **en ce qu'**une position de fin déterminée peut être identifiée par le capteur de position par spécification d'une direction d'entraînement déterminée (12a, 12b) par le dispositif d'entraînement et de commande, et parcours de cette direction d'entraînement jusqu'à atteindre une position finale (7a, 7b).

2. Rétroviseur extérieur pour véhicule selon la revendication 1, **caractérisé en ce que** sont prévues dans la zone des positions de fin des butées (9a, 9b) qui, lors d'un pivotement motorisé de la tête de rétroviseur (3), permettent un blocage dans une direction hors de la zone de déplacement normal, et ne permettent pas de blocage dans une direction vers la zone de déplacement normal.

3. Rétroviseur extérieur pour véhicule selon la revendication 1 ou 2, **caractérisé en ce qu'**un entraînement (10) du dispositif d'entraînement et de commande (4) est fixé d'une part à la tête de rétroviseur (3) et d'autre part au pied de rétroviseur (2), et présente un accouplement à friction (11).

4. Rétroviseur extérieur pour véhicule selon la revendication 2, **caractérisé en ce que** la zone placée en dehors de la zone de déplacement normal est exécutée en tant que position intermédiaire (8b).

5. Rétroviseur extérieur pour véhicule selon l'une des revendications précédentes, **caractérisé en ce que** le dispositif d'entraînement et de commande présente des mémoires pour une position de fin (7a, 7b) préalablement déterminée.

6. Rétroviseur extérieur pour véhicule selon la revendication 1, **caractérisé en ce qu'**un capteur de position unique (6) est prévu.

7. Rétroviseur extérieur pour véhicule selon l'une des revendications précédentes, **caractérisé en ce que** le dispositif d'entraînement et de commande (4) présente un dispositif à minuterie pour inverser la direction d'entraînement (12a, 12b) ou pour arrêter l'entraînement après une durée déterminable de l'entraînement de la tête de rétroviseur dans une direction dépassant la position de fin lorsque le capteur de position se trouve en position de fin.

8. Rétroviseur extérieur pour véhicule selon l'une des revendications précédentes, **caractérisé en ce que** le dispositif d'entraînement et de commande (4) présente un commutateur à courant de bloc pour inverser la direction d'entraînement ou pour arrêter l'entraînement selon un courant de bloc déterminable lors de l'entraînement de la tête de rétroviseur dans la direction dépassant la position de fin (7a, 7b) lorsque le capteur de position se trouve en position de fin.

9. Rétroviseur extérieur pour véhicule selon l'une des revendications précédentes, **caractérisé en ce que** le capteur de position (6) est conçu en tant que capteur comportant un principe de mesure qui repose sur un champ magnétique, un effet optique ou un effet Hall.

10. Rétroviseur extérieur pour véhicule selon l'une des revendications précédentes, **caractérisé en ce que** le capteur de position est un micro-rupteur.

11. Rétroviseur extérieur pour véhicule selon la revendication 10, **caractérisé en ce que** le micro-rupteur (6) est en relation avec un disque à came (13) correspondant.

12. Rétroviseur extérieur pour véhicule selon la revendication 11, **caractérisé en ce que** le disque à came (13) est fixé sur le pied de rétroviseur (2) et le capteur de position (6) est fixé sur la tête de rétroviseur (3), ou **en ce que** le disque à came est fixé sur la tête de rétroviseur et le capteur de position est fixé sur le pied de rétroviseur.

13. Rétroviseur extérieur pour véhicule selon la revendication 11, **caractérisé en ce que** le disque à came présente dans la zone des positions de fin (7a, 7b) des saillies ou des creux par rapport aux positions intermédiaires, suite à quoi, en position la plus élevée, le micro-rupteur (6) est actionné.

14. Rétroviseur extérieur pour véhicule selon l'une des revendications précédentes, **caractérisé en ce que** les positions de fin (7a, 7b) sont une position de stationnement (15), dans laquelle la tête de rétroviseur repose essentiellement contre le châssis du véhicule (5), ainsi qu'une position de conduite (14) dans laquelle la tête de rétroviseur (3) se présente essentiellement perpendiculairement au châssis du véhicule (5).

15. Procédé de commande d'au moins un rétroviseur extérieur pour véhicule selon la revendication 14, **caractérisé en ce que** le rétroviseur extérieur pour véhicule, sur demande d'un utilisateur, est amené dans la position de stationnement (15) lorsqu'il se trouvait précédemment dans la position de conduite (14), et est amené dans la position de conduite lorsqu'il se trouvait précédemment dans la position de stationnement ou qu'il se trouvait en-dehors de la zone de déplacement normal (8a).
